# FASCICULE DE BREVET EUROPEEN

(11) **EP 2 772 155 B1**
(45) Date de publication et mention de la délivrance du brevet: **05.08.2015**
(21) Numéro de dépôt: 13290041.6
(22) Date de dépôt: 28.02.2013
(51) Int. Cl.: A47B 45/00, A47B 96/02, A47F 5/00, B60P 3/14, B60R 7/02, A47B 47/02, A47B 57/18, A47B 96/14

(54) **Meuble de rangement pour véhicules utilitaires**
Aufbewahrungsbox für Nutzfahrzeuge
Storage cabinet for commercial vehicles

(43) Date de publication de la demande: 03.09.2014
(73) Titulaire: MACC, 86104 Chatellerault Cédex (FR)
(72) Inventeur: Cupif, Bertrand, 86104 Chatellerault Cedex (FR); Anguille, Nicolas, 86104 Chatellerault Cedex (FR)

(56) Documents cités:
- EP-A1- 1 308 345
- WO-A1-92/12026
- WO-A1-2009/046480
- WO-A1-2011/029192
- AU-B2- 551 042
- US-A- 4 036 369
- US-A1- 2008 308 515
- US-A1- 2011 260 488

## Description

La présente invention concerne un meuble de rangement pour véhicules utilitaires composé d'un nombre évolutif d'étagères et de bacs.

Il existe de nombreux meubles de rangement pour véhicules, notamment le meuble repris dans le brevet WO 9212026 qui se règle en hauteur mais qui n'est pas télescopique en longueur et en profondeur.

L'idée de la présente invention est venue du fait de l'obligation d'utiliser un meuble spécifique à la carrosserie du véhicule pour s'adapter à la forme et aux zones de fixation ; l'utilisateur ayant acheté un meuble industriel pour un véhicule A ne peut pas facilement l'adapter à un autre véhicule B lors de son changement.

De plus, les meubles industriels existants sont composés de caissons de différentes dimensions superposées. Ils ne s'adaptent donc pas facilement au galbe de la carrosserie laissant des espaces vides entre ces caissons et la tôle du véhicule.

De même pour la longueur, les caissons sont d'une longueur figée qui ne permet pas d'évolution durant la vie du véhicule.

Cette précédente remarque est identique pour la hauteur ; l'utilisateur ne pouvant plus modifier la hauteur des différents caissons empilés.

La présente invention décrit un ensemble de rangement pour véhicules utilitaires composé de trois parties principales, un châssis réglable, des étagères télescopiques et des bacs amovibles télescopiques.

Ce châssis est composé d'un rail qui se fixe au longeron du plafond du véhicule suivant l'axe principal du véhicule. Sur ce rail sont fixés deux poteaux télescopiques verticaux comportant deux pieds. Ils créent une liaison entre le sol et le plafond. L'écartement entre les deux poteaux verticaux est réglable en fonction de la place disponible car le rail est perforé sur toute sa longueur. Les poteaux sont télescopiques pour s'adapter à la hauteur du véhicule. Entre ces deux poteaux qui créent la structure de l'ensemble de rangement viennent se placer les étagères qui sont télescopiques pour s'adapter à la distance entre poteaux. L'utilisateur peut choisir la hauteur et la profondeur où sera fixée l'étagère car un système de perforations et de boulons des poteaux et des extrémités des étagères permet de nombreux réglages évolutifs dans le temps si nécessaire.

Entre ces deux poteaux peut aussi être fixé un double rail télescopique qui permet comme les étagères, de régler la longueur entre les deux poteaux. Ils sont aussi déplaçables si besoin en hauteur et en profondeur. Sur ce double rail viennent se placer des bacs amovibles qui sont eux réglables en profondeur pour occuper un maximum de place disponible entre le châssis et les côtés tôlés du véhicule.

En positionnant judicieusement ce système de bacs et de rails dans la partie haute du véhicule, on obtient un meuble qui optimise l'espace de stockage dans le véhicule.

Cette disposition du châssis des étagères et des bacs, s'adapte donc dans l'espace disponible et n'est pas dépendante de la forme exacte du galbe de la carrosserie. Elle peut s'adapter dans tous les véhicules ayant un plafond avec des longerons et un plancher.

Une autre disposition préférée, composée d'une élingue fixée au châssis et d'une platine qui vient se poser sur un longeron horizontal de la carrosserie permet aux plus grands véhicules d'avoir une fixation intermédiaire permettant d'améliorer la résistance aux chocs lors d'accidents. L'intérêt de cette élingue est encore la souplesse permettant de placer la platine différemment en fonction des différentes carrosseries, à la différence des meubles existants qui sont fixés par des équerres spécifiques à chaque véhicule.

Une autre disposition préférée, permet de clipper ou décliper simplement les bacs sur leur double rail de façon intuitive et efficace.
La figure 1 montre, en représentation partielle, l'ensemble du meuble en perspective installé dans une carrosserie de véhicule utilitaire.
La figure 2 montre, en perspective, le rail supérieur et les montants seuls.
La figure 3 présente, vu de côté, le meuble de rangement dans sa version étendue au maximum dans l'axe vertical.
La figure 4 présente, vu de côté, le meuble étendu en position minimum dans l'axe vertical.
La figure 5 présente, en perspective, la liaison du rail à un des montants verticaux.
La figure 6 présente, en coupe, la liaison d'un rail à un des montants, selon un plan vertical passant par le centre du montant.
La figure 7 présente, en perspective, l'ensemble élingue monté sur le meuble.
La figure 8 présente, en perspective, un meuble complet.
La figure 9 présente, en perspective, une étagère avec les cloisons.
La figure 10 présente un double rail télescopique avec un bac.
La figure 11 présente, en coupe, le montage d'un bac sur un rail télescopique.
La figure 12 présente, vu de dessus, l'ensemble élingue monté sur un montant.
La figure 13 présente, en perspective, vue de dessous, le montage des deux parties des bacs plastiques.
La figure 14 présente, en perspective, un bac monté en position minimum

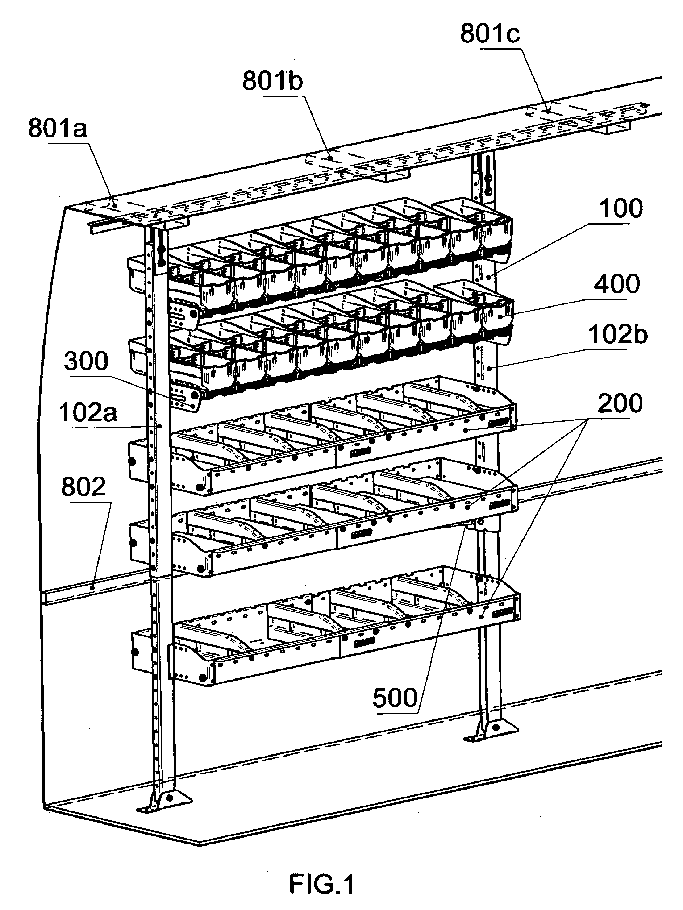

Selon les figures 1, 2 et 4, le châssis (100) est composé d'un rail perforé (101) fixé aux longerons du véhicule par des rivets ou équivalents.

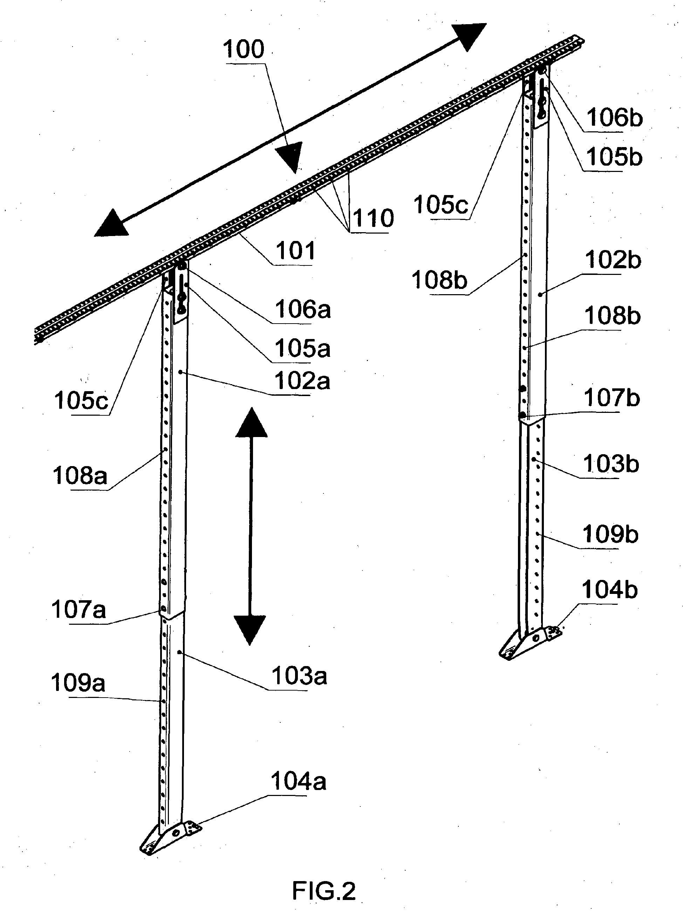

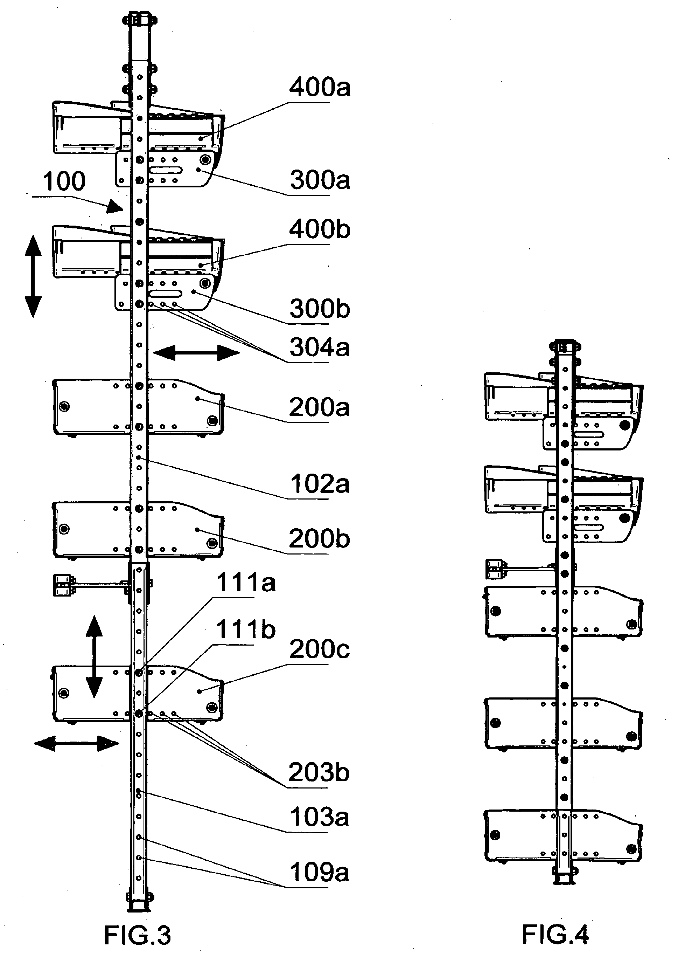

Selon les figures 2 et 4, deux poteaux (102a, 102b) viennent se positionner au niveau du rail perforé (101) via un ensemble de deux platines (105a, 105c) et d'un boulon (106a, 106b) traversant la perforation (110) du rail perforé (101). L'écartement entre ces deux poteaux (102a, 102b) correspondra à la largeur du meuble souhaitée par l'utilisateur. Dans ces poteaux (102a, 102b) vient coulisser un poteau (103a, 103b) permettant la jonction au plancher du véhicule via les pieds (104a, 104b). Après réglage, les tubes sont immobilisés par les boulons (107a, 107b) traversant les perforations (108a, 108b) (et 109a, 109b) des poteaux (102a, 102b) (et 103a, 103b). Les pieds (104a, 104b) sont liés au plancher via des vis ou équivalent.

Selon la figure 1, ce châssis (100) forme un cadre résistant servant de support aux étagères (200) et au rail bac (300) supportant les bacs (400).

Selon les figures 2, 3 et 9, l'étagère (200) est composée de deux demi bacs (201, 202) coulissant l'un dans l'autre permettant un réglage en longueur via la série de boulons (205a, 205b, 205c) qui via les perforations (206, 207) vient bloquer les demis bacs (201, 202) à une position choisie par l'utilisateur avec un pas de perforation (206, 207) compatible avec l'entraxe des deux poteaux (102a, 102 b) car la perforation (110) du rail perforé (101) est d'un pas compatible avec les perforations (206, 207) du bac (200).

Selon les figures 2, 3 et 4, les étagères (200a, 200b, 200c) viennent toutes se fixer de la même façon sur le châssis (100).

Toujours selon les figures 2, 3 et 4, nous décrivons la solution pour la première étagère (200 c) et ce pour le premier poteau (102a, 103a) ; le second poteau étant identique. Des boulons (111a, 111b) traversent la perforation (109a) du poteau (103a) et viennent lier l'étagère (200c) via ses propres perforations (203b). L'utilisateur peut donc régler la position verticale et régler la position en profondeur du poteau (103a). La même solution est valable pour les étagères (200a, 200b) sur le poteau (102a).

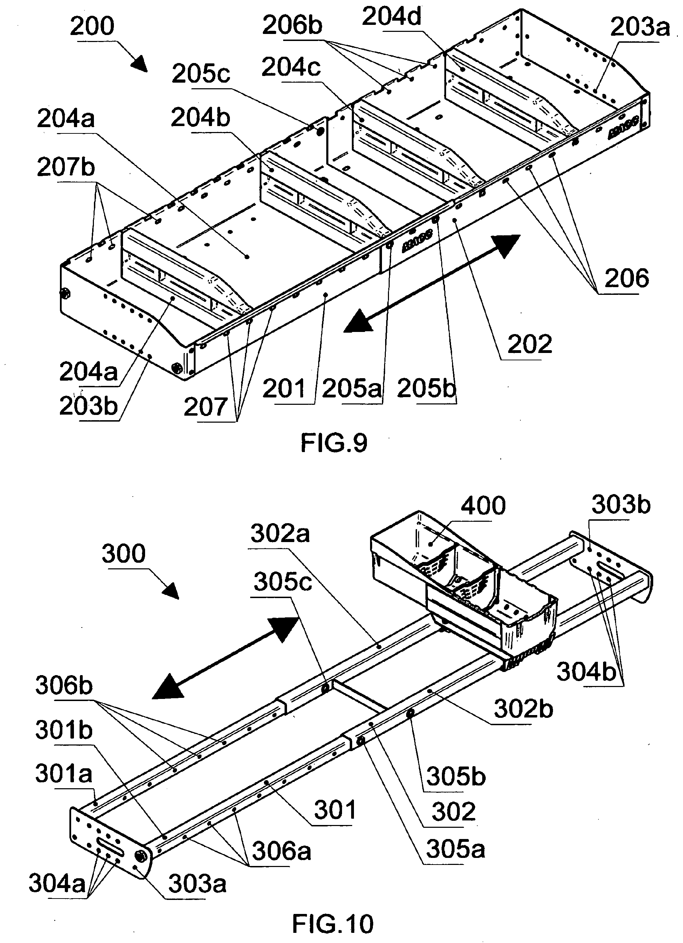

Selon les figures 2 et 10, le rail bac (300) est composé de deux ensembles (301) (et 302) coulissant l'un dans l'autre. Ils sont composés de façon identique par des ensembles (301a, 301b) (et 302a, 302b) soudés à deux platines (303a, 303b). La longueur du rail bac (300) est réglable et verrouillée via la série de boulons (305a, 305b, 305c) venant dans les perforateurs (306a, 306b) de l'ensemble (301). De la même façon que précédemment pour l'étagère (200), l'utilisateur peut adapter la longueur du rail bac (300) à la distance entre les poteaux (102a, 102b) du châssis (100).

Selon les figures 2, 3 et 4, les rails bacs (300a, 300b) se positionnent de la même façon avec leur propre perforation (304a) que les étagères (200a, 200b, 200c).

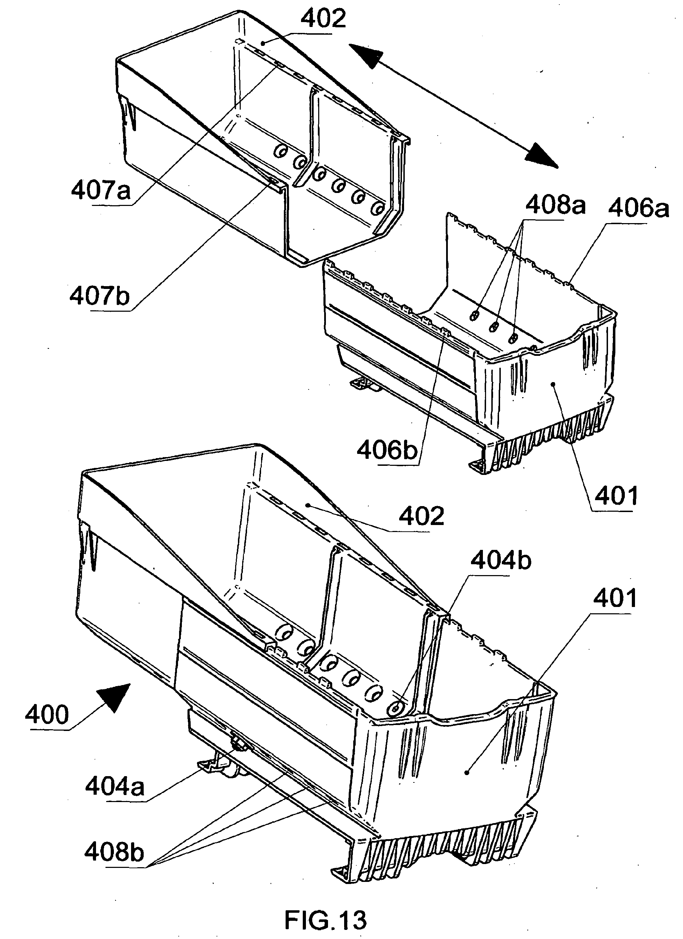

Selon les figures 1 et 13, un bac (400) est composé d'un demi bac avant (401) coulissant avec le demi bac arrière (402). Un pas défini sur les créneaux (406a, 406b) et les trous correspondant (407a, 407b) permet à l'utilisateur de régler la profondeur du bac (400) en fonction de la place disponible entre le châssis (100) et la carrosserie du véhicule. Après réglage, les demi bacs (401 et 402) sont immobilisés par les deux boulons (404a, 404 b) via les perforations (408a, 408b) ayant le même pas que les créneaux (406a, 406b). L'utilisateur obtient alors un bac (400) rigide.

Selon les figures 1, 10 et 14, un ressort plat (405) est assemblé au bac (400) via des rivets (410). Une série de bacs (400) vient se positionner sur le rail bac (300).

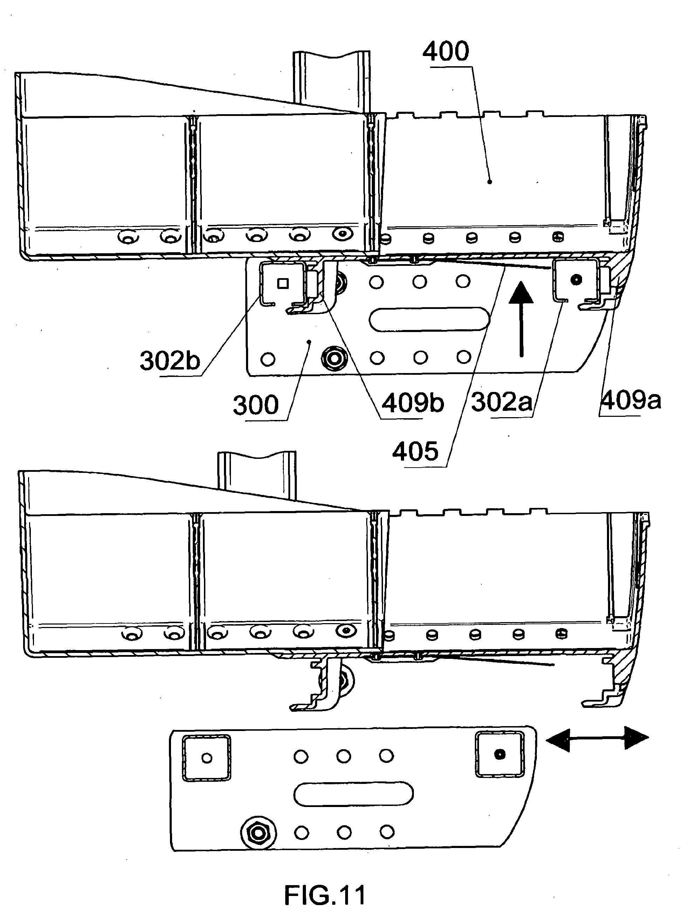

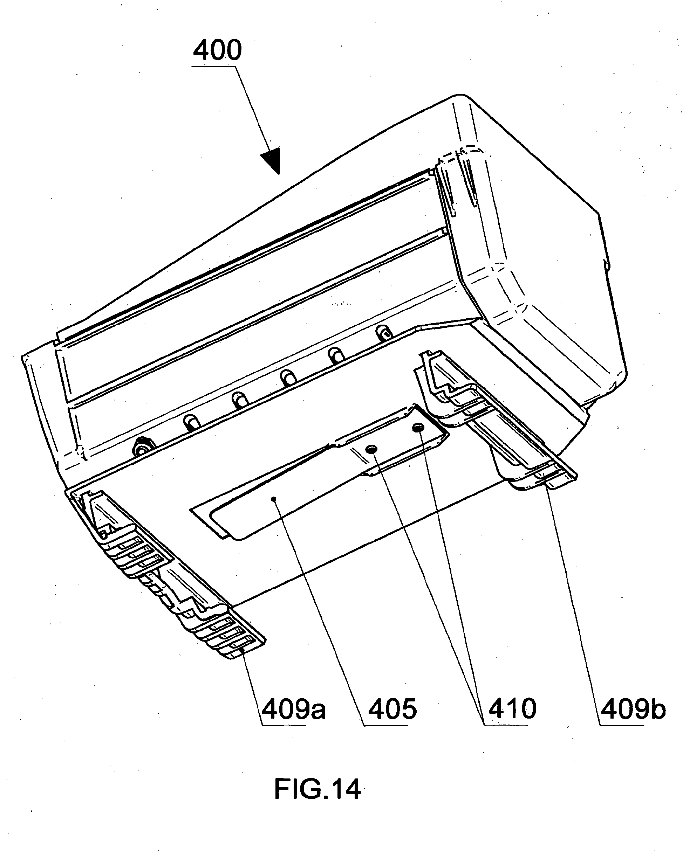

Selon les figures 11 et 14, pour fixer un bac (400) sur un rail bac (300), l'utilisateur vient engager perpendiculairement au rail bac (300) les deux crochets (409a, 409b) du bac (400) avec deux ensembles respectifs (302a, 302b) du rail bac (300). Quand l'ensemble rentre en butée, le ressort plat (405) se déploie naturellement et empêche le bac (400) de ressortir.

Selon la figure 11, pour enlever le bac, l'utilisateur doit d'abord comprimer verticalement le ressort plat (405) pour ensuite ressortir le bac (400) dans le sens opposé à l'introduction pour escamoter les deux crochets (409a) (et 409b) des deux ensembles (302a, 302b).

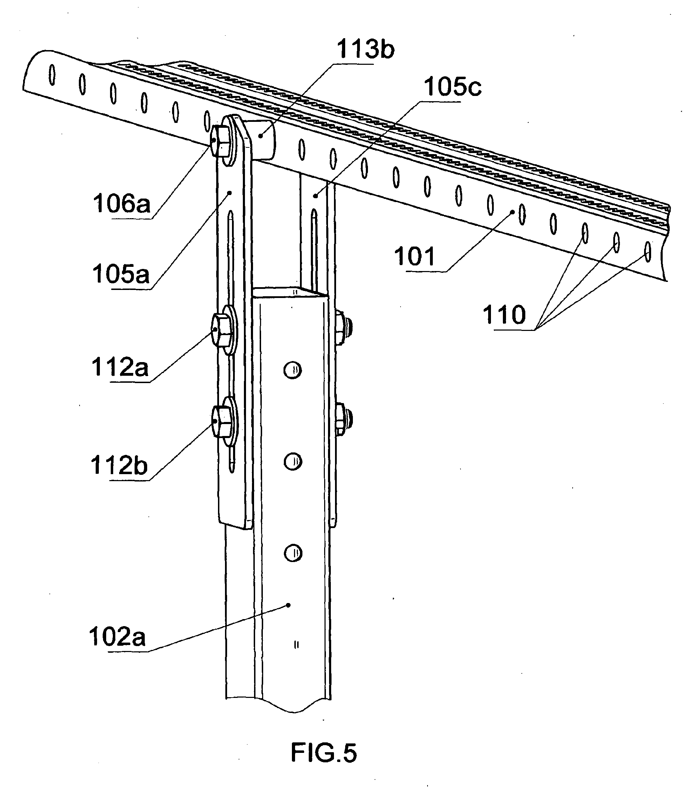

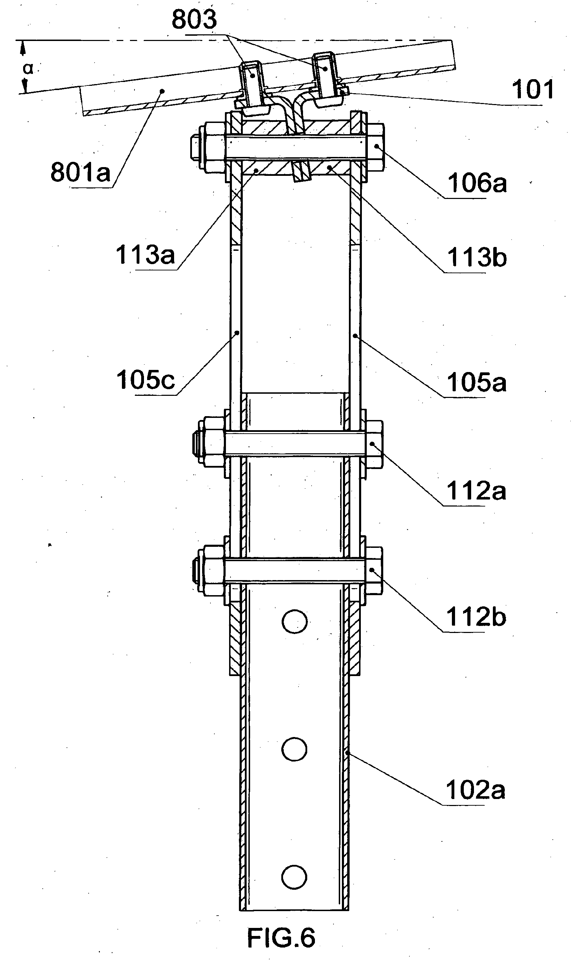

Selon les figures 1, 5 et 6, la liaison des poteaux (102a, 102b) au rail perforé (101) est souple. Elle permet de s'adapter aux inclinaisons des longerons (801a, 801b, 801c) de la carrosserie.

Toujours selon les figures 1, 5 et 6, le rail perforé (101) est fixé aux longerons (801a, 801b, 801c) via des vis (803). Le boulon (106a) crée la liaison entre le poteau (102a) et le rail perforé (101) via les deux platines (105a, 105c) fixées au poteau (102a) par deux boulons (112b, 112a). Pour supprimer les jeux et accepter un angle (α) du rail perforé (101) par rapport au plafond, sur les boulons (106a) sont placées deux entretoises (113a, 113b) en matériau élastique.

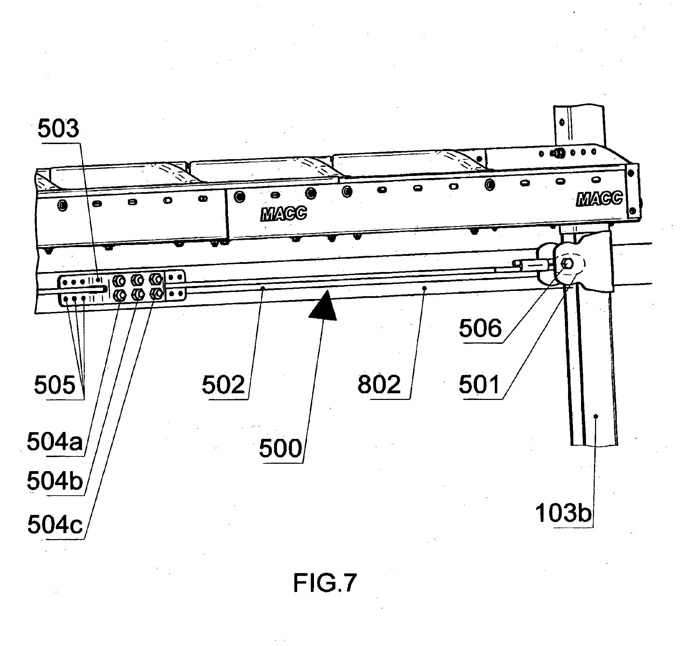

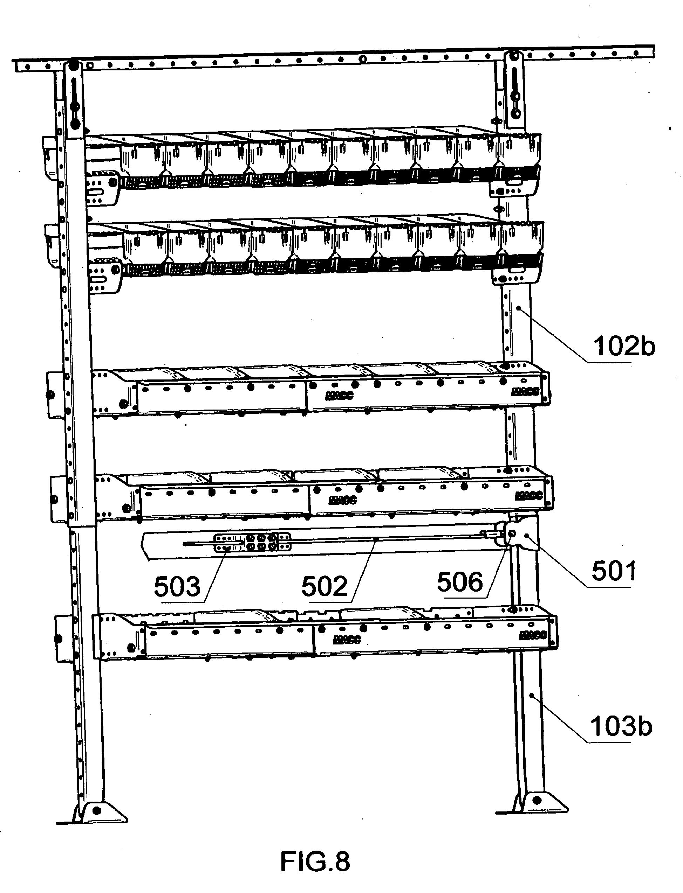

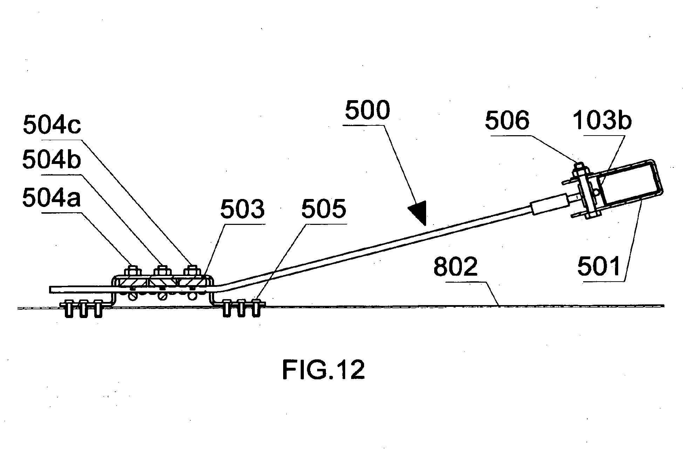

Selon les figures 7, 8 et 12, le système d'élingue (500) est composé d'une pièce en U (501) venant se positionner sur le poteau (103b ou 102b) et via le boulon (506), une élingue câble (502) est tendue et immobilisée via les serre câbles (504a, 504b, 504c) liés à la platine (503), elle même fixée à un longeron horizontal (802) de la carrosserie du véhicule par des vis (505). Ce système permet de résister à un déplacement du meuble lors d'un choc. Il crée un point de liaison intermédiaire entre le plafond et le plancher.

## Revendications

1. Meuble de rangement pour véhicules utilitaires tel qu'il est composé d'un châssis (100) lui-même composé de deux poteaux (102a, 102b) coulissant sur deux autres poteaux (103a, 103b) se fixant les uns aux autres par paire permettant ainsi de régler la hauteur du châssis (100) ; des étagères (200) viennent se fixer aux poteaux (102a, 102b, 103a, 103b) du châssis (100) par l'intermédiaire de perforations (203) permettant de régler la position en hauteur et en profondeur, ces étagères sont composées de demi bacs (201, 202) coulissant l'un dans l'autre afin d'en régler la longueur comprenant des rails bacs (300), chacun formé de deux ensembles (300a, 300b) qui se règlent en longueur en coulissant l'un dans l'autre, chaque rail bac (300) vient se fixer aux poteaux (102a, 102b, 103a, 103b) du châssis (100) par l'intermédiaire de perforations (304a) permettant de régler la position en hauteur et en profondeur ; sur le rail bac (300) se positionnent des bacs (400), composé d'un demi bac avant (401) coulissant avec un demi bac arrière (402) ; un pas défini sur des créneaux (406a, 406b) et des trous correspondant (407a, 407b) permettent à l'utilisateur de régler la profondeur du bac (400) en fonction de la place disponible entre le châssis (100) et la carrosserie du véhicule sur lequel le module est destiné à être monté, ainsi l'aménagement s'adapte en hauteur, en longueur et en profondeur à tous types de véhicules et au galbe de la carrosserie.

2. Meuble de rangement pour véhicules utilitaires selon la revendication 1 **caractérisé en ce qu'**un rail perforé (101) est fixé aux longerons (801a, 802b, 803c) du plafond du véhicule par des vis (803), les poteaux (102a, 102b) viennent se positionner au niveau du rail perforé (101) via un ensemble de deux platines (105a, 105b) fixées par des boulons (106a, 106b) traversant des perforations (110) du rail perforé (101), les platines (105a, 105c) sont fixées aux poteaux (102a, 102b) par deux boulons (112a, 112b) ; pour limiter les jeux et accepter un angle (α) de rail perforé (101) sur les boulons (106a, 106b) sont placées deux entretoises (113a, 113b) en matériau élastique et deux pieds (104a, 104b) des poteaux (103a, 103b) se fixent sur le plancher du véhicule, cet ensemble d'éléments permet à l'aménagement de s'adapter à tous types de véhicules quelle que soit la position et l'inclinaison des longerons du plafond.

3. Meuble de rangement pour véhicules utilitaires selon la revendication 1 **caractérisé en ce qu'**une élingue (500) composée d'une pièce en U (501) venant se positionner n'importe où sur les poteaux (102b ou 103b) selon besoin via un boulon (506) une élingue à câble (502) est tendue et immobilisée via un ou plusieurs serre-câbles (504a, 504b, 504c) liés à une platine (503) elle-même fixée à un longeron horizontal (802) de la carrosserie du véhicule, permettant ainsi de résister à un déplacement du meuble lors d'un choc et créant un point de liaison intermédiaire entre le plafond et le plancher quelles que soient la forme de la carrosserie et la position dans le véhicule.

4. Meuble pour aménagement de fourgons selon la revendication 1 **caractérisé en ce que** des bacs (400) viennent se fixer sur les rails bacs (300) deux crochets (409a, 409b) viennent s'engager perpendiculairement sur des ensembles (302a, 302b) (ou 301a, 301b) du rail bac (300), lorsque l'ensemble rentre en butée, un ressort plat (405) se déploie naturellement et empêche le bac (400) de ressortir, permettant un engagement ou un retrait facile dudit bac (400) ainsi qu'un verrouillage automatique lors de l'engagement.

## Patentansprüche

1. Regalsystem für Nutzfahrzeuge, bestehend aus einem Rahmen (100), der wiederum aus zwei, auf zwei anderen Trägern (103a, 103b) gleitenden Trägern (102a, 102b) besteht, die paarweise miteinander verbunden sind und somit die Höheneinstellung des Rahmens (100) ermöglichen, wobei Regale (200) über Stanzlöcher (203), die eine Höhen- und Tiefeneinstellung ermöglichen, an den Trägern (102a, 102b, 103a, 103b) des Rahmens (100) fixiert werden, wobei diese Regale aus halben Fächern (201, 202) bestehen, die zur Längeneinstellung ineinander gleiten und Fächerschienen (300) umfassen, die jeweils aus zwei (300a, 300b) Einheiten bestehen, die, indem sie ineinander gleiten, längenmäßig einstellbar sind, wobei jede Fächerschiene (300) über Stanzlöcher (304a), die eine Höhen- und Tiefeneinstellung ermöglichen, an den Trägern (102a, 102b, 103a, 103b) des Rahmens (100) fixiert ist; auf der Fächerschiene (300) lassen sich Fächer (400) positionieren, die aus einem halben Vorderfach (401), das mit einem halben Hinterfach (402) gleitet, bestehen; durch eine definierte Teilung auf den Zacken (406a, 406b) und entsprechende Löcher (407a, 407b) kann der Anwender die Tiefe des Fachs (400) entsprechend dem verfügbaren Platz zwischen dem Rahmen (100) und der Fahrzeugkarrosserie, an der das Regalsystem montiert werden soll, einstellen, sodass sich die Einrichtung in der Höhe, Länge und Tiefe allen Fahrzeugtypen und der Wölbung der Karrosserie anpassen lässt.

2. Regalsystem für Nutzfahrzeuge nach Anspruch 1, **dadurch gekennzeichnet, dass** eine gelochte Schiene (101) mit Schrauben (803) an den Längsträgern (801 a, 802b, 803c) des Fahrzeugdachs fixiert wird, dass sich die Träger (102a, 102b) im Bereich der gelochten Schiene (101) über ein System mit zwei Platten (105a, 105b), die über Stanzlöcher (110) der gelochten Schiene (101) durchquerende Bolzen (106a, 106b) fixiert sind, positionieren, wobei die Platten (105a, 105c) mit zwei Bolzen (112a, 112b) an den Trägern (102a, 102b) fixiert sind; um die Spielräume einzuschränken und einen Winkel (α) der gelochten Schiene (101) auf den Bolzen (106a, 106b) zuzulassen, werden zwei Distanzstücke (113a, 113b) aus Kunststoff angebracht und zwei Füße (104a, 104b) der Träger (103a, 103b) am Fahrzeugboden fixiert, wobei sich die Einrichtung durch diese Einheit von Elementen unabhängig von der Position und der Neigung der Längsträger des Fahrzeugdachs an alle Fahrzeugtypen anpassen kann.

3. Regalsystem für Nutzfahrzeuge nach Anspruch 1, **dadurch gekennzeichnet, dass** sich ein aus einem U-förmigen (501) Teil bestehender Anschlag (500) bedarfsgerecht über einen Bolzen (506) auf den Trägern (102b oder 103b) positionieren lässt ; wobei eine Seilschlinge (502) gespannt und durch eine oder mehrere Seil-Klemmbacken (504a, 504b, 504c), die mit einer Platte (503) verbunden sind, blockiert wird, wobei diese Platte selbst an einem waagrechten Längsträger (802) der Fahrzeugkarrosserie fixiert ist und somit ermöglicht, bei einem Zusammenstoß ein Bewegen des Regalsystems zu verhindern, indem unabhängig von der Form der Karrosserie und der Position im Fahrzeug zwischen dem Fahrzeugdach und -boden ein mittlerer Verbindungspunkt hergestellt wird.

4. Regalsystem für Kastenwägen nach Anspruch 1, **dadurch gekennzeichnet, dass** Fächer (400) auf der Fächerschiene (300) fixiert werden und zwei Haken (409a, 409b) transversal in Systeme (302a, 302b) (oder 301a, 301b) der Fächerschiene (300) eingreifen, wenn das System zum Anschlag kommt, wobei eine Flachfeder (405) naturgemäß auseinandergeht und so das Herausfallen des Fachs (400) verhindert, was ein leichtes Anbringen bzw. Entnehmen des Fachs (400) sowie ein automatisches Verriegeln beim Anbringen ermöglicht.

## Claims

1. A storage unit for utility vehicles such that it is made up of a frame (100) in turn made up of two posts (102a, 102b) sliding on two other posts (103a, 103b) fixed to each other in pairs thus allowing the height adjustment of the frame (100); shelves (200) are fixed to the posts (102a, 102b, 103a, 103b) of the frame (100) by means of perforations (203) that make the position adjustable in height and depth; the shelves are made up of half trays (201, 202) that slide in each other in order to adjust the length, comprising tray rails (300), each made up of two assemblies (300a, 300b), the length of which can be adjusted by sliding them in each other, where each tray rail (300) is fixed to the posts (102a, 102b, 103a, 103b) of the frame (100) by means of perforations (304a) that make the position adjustable in height and depth; on the lower rail (300) trays (400) made up of a front half tray (401) sliding on a rear half tray (402) are placed; increments defined on slots (406a, 406b) and corresponding holes (407a, 407b) allow the user to adjust the depth of the tray (400) depending on the space available between the frame (100) and the body of the vehicle for which the unit is intended to be assembled; the height, length and depth of the fitting is thus adjustable to all types of vehicle and the contour of the body work.

2. A storage unit for utility vehicles according to claim 1 **characterized in that** a perforated rail (101) is fixed to the longitudinal members (801a, 802b, 803c) of the roof of the vehicle using screws (803); the posts (102a, 102b) are placed on the perforated rail (101) via a set of two plates (105a, 105b) fastened with bolts (106a, 106b) that go through the perforations (110) of the perforated rail (101), where the plates (105a, 105c) are fastened to the posts (102a, 102b) by two bolts (112a, 112b); to limit play and accept a perforated rail (101) angle (α) on the bolts (106a, 106b) two spacers (113a, 113b) in elastic material are placed and two feet (104a, 104b) of the posts (103a, 103b) are fastened to the floor of the vehicle; this assembly of elements allows the fitting to adapt to all types of vehicles regardless of the position and inclination of the longitudinal members of the ceiling.

3. A storage unit for utility vehicles according to claim 1 **characterized in that** a sling (500) made of a U-shaped piece (501) can be placed anywhere on the posts (102b or 103b) as needed via a bolt (506); a cable sling (502) is tensioned and immobilized via one or more cable clamps (504a, 504b, 504c) joined to a plate (503), itself fixed to a horizontal member (802) of the body of the vehicle, thus allowing the unit to withstand movement during an impact and creating an intermediate joining point between the ceiling and the floor regardless of the shape of the body and the position in the vehicle.

4. A unit for fitting vans according to claim 1 **characterized in that** trays (400) are fastened to the tray rail (300) and two hooks (409a, 409b) are engaged in a perpendicular manner on the assemblies (302a, 302b) (or 301a, 301b) of the tray rail (300), when the assembly is in the limit position, a flat spring (405) is deployed naturally and prevents the tray (400) from moving out again, allowing the easy engagement or removal of said tray (400) and automatic locking during engagement.
